# EUROPEAN PATENT APPLICATION

(11) **EP 4 692 236 A1**
(43) Date of publication of application: **11.02.2026**
(21) Application number: 24785263.5
(22) Date of filing: 04.04.2024
(51) Int. Cl.: C08L 69/00, C08L 33/12, C08L 33/04, C08L 83/10, C08G 77/448, C08K 3/013, C08K 3/22, C08K 5/00, C08K 5/3492

(54) **THERMOPLASTIC RESIN COMPOSITION HAVING EXCELLENT HARDNESS, DISCOLORATION RESISTANCE, AND IMPACT RESISTANCE, AND MOLDED ARTICLE COMPRISING SAME**

(30) Priority: 05.04.2023 KR 20230045024
(71) Applicant: Samyang Corporation, Jongno-gu Seoul 03129 (KR)
(72) Inventor: LEE, Dong Hyun, Daejeon 35216 (KR); PARK, Ki Chung, Daejeon 34120 (KR); SOHN, Yong Jei, Sejong 30153 (KR); AN, Tae Jin, Seoul 06664 (KR)
(74) Representative: Gleiss Große Schrell und Partner mbB
(86) International application number: PCT/KR2024/004422
(87) International publication number: WO 2024/210563

(57) **Abstract**

The present invention relates to a thermoplastic resin composition having excellent hardness, discoloration resistance, and impact resistance, and a molded article comprising same. More specifically, the present invention relates to a thermoplastic resin composition and a molded article comprising same, the thermoplastic resin composition comprising, in a specific content ratio, a polycarbonate resin, a polysiloxane-polycarbonate copolymer, a modified acrylic copolymer, an alumina-based inorganic filler, a triazine-based ultraviolet stabilizer, and a core-shell type acrylic-based impact modifier, the thermoplastic resin composition having excellent scratch resistance whilst also having excellent discoloration resistance and impact strength.

## Description

### TECHNICAL FIELD

The present invention relates to a thermoplastic resin composition with excellent hardness, color change resistance and impact resistance and a molded article comprising the same, and more specifically, it relates to a thermoplastic resin composition which comprises polycarbonate resin, polysiloxane-polycarbonate copolymer, modified acryl-based copolymer, alumina-based inorganic filler, triazine-based ultraviolet stabilizer, and core-shell type acryl-based impact modifier with specific amount ratios, and has excellent scratch resistance and also having excellent color change resistance and impact strength at the same time, and a molded article comprising the same.

### BACKGROUND ART

Polycarbonate resin is a general-purpose thermoplastic engineering plastic which is prepared by polycondensation of bisphenol A and phosgene, and has a glass transition temperature of around 150°C, and it has excellent mechanical properties such as tensile strength and impact strength, etc., dimensional stability, heat resistance and optical transparency, and because of such excellent properties, its use as a high-temperature-resistant engineering plastic that replaces glass is expanding day by day, including as housing for electrical/electronic products or as panels for construction and advertising.

In order for polycarbonate resin to be used as an exterior material, scratch resistance (high hardness) is required in addition to the mechanical properties. However, in case of introducing post-processing such as painting or vapor deposition to satisfy such characteristics, there are disadvantages in economic and environmental aspects.

Therefore, polycarbonate resin compositions capable of producing molded articles having high hardness even without surface coating (i.e., paint-free) have been developed. For example, Korean Patent No. 10-1297160 discloses a polycarbonate resin composition with improved scratch resistance, comprising polycarbonate, polycarbonate-polysiloxane copolymer, and modified acryl-based copolymer. However, in spite of a satisfactory level of hardness thereof, the composition disclosed in this patent has very poor impact resistance (i.e., the IZOD Notched impact strength according to ASTM D256 at a level of 3 to 5 kgfcm/cm) and poor color change resistance (i.e., severe color change (yellowing) when exposed to ultraviolet (UVB) rays).

Accordingly, there is still a need for thermoplastic resin composition utilizing polycarbonate that exhibits excellent scratch resistance and high hardness characteristics, while also exhibiting excellent impact resistance and color change (yellowing) resistance.

### CONTENTS OF THE INVENTION

### PROBLEMS TO BE SOLVED

The purpose of the present invention is to provide a thermoplastic resin composition utilizing polycarbonate, which can provide excellent high hardness, impact resistance and color change (yellowing) resistance together to a molded article even without post-processing such as painting or vapor deposition, and thus can be suitably used particularly for paint-free product, and a molded article comprising the thermoplastic resin composition.

### TECHNICAL MEANS

An aspect of the present invention provides a thermoplastic resin composition comprising: (A) polycarbonate resin; (B) polysiloxane-polycarbonate copolymer comprising hydroxy-terminated siloxane and polycarbonate block as repeating units; (C) modified acryl-based copolymer; (D) alumina-based inorganic filler; (E) triazine-based ultraviolet stabilizer; and (F) core-shell type acryl-based impact modifier; wherein, based on total 100 parts by weight of the composition, the amount of the (A) component is from more than 30 parts by weight to less than 70 parts by weight, the amount of the (B) component is from more than 15 parts by weight to less than 45 parts by weight, the amount of the (C) component is from more than 5 parts by weight to less than 25 parts by weight, the amount of the (D) component is from more than 0.1 parts by weight to less than 3 parts by weight, the amount of the (E) component is from more than 0.1 parts by weight to 3 parts by weight, and the amount of the (F) component is from more than 1 parts by weight to less than 8 parts by weight.

In an embodiment, the viscosity average molecular weight of the thermoplastic resin composition may be 15,000 to 40,000.

According to the other aspect, the present invention provides a molded article comprising the thermoplastic resin composition of the present invention.

### EFFECT OF THE INVENTION

The thermoplastic resin composition according to the present invention has excellent scratch resistance of pencil hardness B or higher even without post-processing such as painting or vapor deposition, excellent impact resistance of room temperature IZOD (Notched, 1/8") impact strength of 30 kgfcm/cm or higher, and excellent color change resistance of less than 3 in color difference (dE) after UVB (72h) irradiation, and thus it can be usefully applied to various products such as mobile phone housings, earphone housings, TV housings, refrigerator housings, copiers, printers, etc.

### CONCRETE MODE FOR CARRYING OUT THE INVENTION

The present invention is explained in more detail below.

The thermoplastic resin composition of the present invention comprises (A) polycarbonate resin; (B) polysiloxane-polycarbonate copolymer comprising hydroxy-terminated siloxane and polycarbonate block as repeating units; (C) modified acryl-based copolymer; (D) alumina-based inorganic filler; (E) triazine-based ultraviolet (UV) stabilizer; and (F) core-shell type acryl-based impact modifier.

### (A) Polycarbonate resin

As the polycarbonate resin comprised in the thermoplastic resin composition of the present invention, thermoplastic aromatic polycarbonate resin may be used, and such a thermoplastic polycarbonate resin may be prepared from a dihydric phenol, a carbonate precursor and a molecular weight-controlling agent.

For example, the dihydric phenol is a monomer of the polycarbonate resin having the following structure:

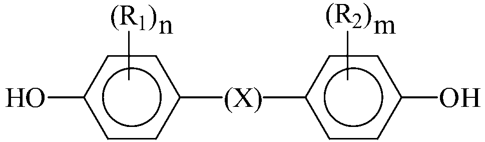

In the above structure, X includes all of the cases comprising functional group such as alkyl group, sulfide, ether, sulfoxide, sulfone, ketone, etc. and the cases with no functional group. Preferably, X represents a linear, branched or cyclic alkylene group, and more preferably, X represents a linear, branched or cyclic alkylene group containing 1 to 10 carbon atoms. Each of R₁ and R₂ represents hydrogen, halogen atom, or a linear, branched or cyclic alkyl group. Each of n and m independently may be an integer of 0 to 4. The case of n and/or m being 0 means that R₁ and/or R₂ is hydrogen.

Non-limited examples of the above dihydric phenol include bis(4-hydroxyphenyl)methane, bis(4-hydroxyphenyl)phenylmethane, bis(4-hydroxyphenyl)naphthylmethane, bis(4-hydroxyphenyl)-(4-isobutylphenyl)methane, 1,1-bis(4-hydroxyphenyl)ethane, 1-ethyl-1,1-bis(4-hydroxyphenyl)propane, 1-phenyl-1,1-bis(4-hydroxyphenyl)ethane, 1-naphthyl-1,1-bis(4-hydroxyphenyl)ethane, 1,2-bis(4-hydroxyphenyl)ethane, 1,10-bis(4-hydroxyphenyl)decane, 2-methyl-1,1-bis(4-hydroxyphenyl)propane, 2,2-bis(4-hydroxyphenyl)propane (bisphenol A), etc., and among them, the representative one is bisphenol A.

The carbonate precursor is another monomer of the polycarbonate resin, and it is preferable to use phosgene (carbonyl chloride). Non-limited examples of the carbonate precursor also include carbonyl bromide, bis halo formate, diphenyl carbonate or dimethyl carbonate, etc.

As the molecular weight-controlling agent, the conventionally known compound, i.e., a monofunctional compound similar to a monomer used in preparation of thermoplastic aromatic polycarbonate resin may be used. As non-limiting examples, derivatives based on phenol (for example, para-isopropylphenol, para-tert-butylphenol, para-cumylphenol, para-isooctylphenol, para-isononylphenol, etc.) may be used, and various other materials such as aliphatic alcohols, etc. also may be used, and among them, it is most preferable to apply para-tert-butylphenol (PTBP).

The aromatic polycarbonate resin prepared from such dihydric phenol, carbonate precursor and molecular weight-controlling agent, may be, for example, linear polycarbonate resin, branched polycarbonate resin, copolycarbonate resin, and polyestercarbonate resin, etc.

In exemplary embodiments of the present invention, it is preferable to use a thermoplastic aromatic polycarbonate resin having a viscosity average molecular weight (Mᵥ) measured in methylene chloride solution at 25°C of 15,000 to 40,000, more preferably 17,000 to 30,000. If the viscosity average molecular weight is less than 15,000, mechanical properties such as impact strength, tensile strength, etc. may be seriously lowered, and to the contrary, if it is more than 40,000, melt viscosity increases, and thereby problems may be caused in resin processing. Particularly, in aspect of mechanical properties such as impact strength, tensile strength, etc., a viscosity average molecular weight of 20,000 or more is preferred, and in aspect of processability, a viscosity average molecular weight of 30,000 or less is preferred.

The thermoplastic resin composition of the present invention comprises said (A) polycarbonate resin in an amount of from more than 30 parts by weight to less than 70 parts by weight, based on total 100 parts by weight of the composition. If the amount of the component (A) in total 100 parts by weight of the composition is 30 parts by weight or less, the scratch resistance of the composition may become poor, and to the contrary, if it is 70 parts by weight or more, the scratch resistance of the composition may become poor or the impact resistance may become poor.

In an embodiment, based on total 100 parts by weight of the thermoplastic resin composition of the present invention, the amount of said (A) polycarbonate resin may be, for example, more than 30 parts by weight, 31 parts by weight or more, 32 parts by weight or more, 33 parts by weight or more, 34 parts by weight or more, 35 parts by weight or more, 36 parts by weight or more, or 37 parts by weight or more, and it also may be less than 70 parts by weight, 69 parts by weight or less, 68 parts by weight or less, 67 parts by weight or less, 66 parts by weight or less, 65 parts by weight or less, 64 parts by weight or less, 63 parts by weight or less, 62 parts by weight or less, 61 parts by weight or less, 60 parts by weight or less, 59 parts by weight or less, or 58 parts by weight or less, but it is not especially limited thereto.

### (B) Polysiloxane-polycarbonate copolymer

The polysiloxane-polycarbonate copolymer comprised in the thermoplastic resin composition of the present invention comprises hydroxy-terminated siloxane and polycarbonate block as repeating units.

In an embodiment, the hydroxy-terminated siloxane comprised in the polysiloxane-polycarbonate copolymer may have a weight average molecular weight (Mw) of 2,500 to 15,000, more specifically 3,500 to 13,000, and still more specifically 4,000 to 9,000. If the weight average molecular weight of the hydroxy-terminated siloxane is less than 2,500, the effect of improving impact resistance may be little, and to the contrary, if it is more than 15,000, the reactivity may be lowered and thus there may be a problem in synthesizing the polysiloxane-polycarbonate copolymer with desired molecular weight.

In an embodiment, the amount of the hydroxy-terminated siloxane in the polysiloxane-polycarbonate copolymer may be 6 % by weight or more, 6.5 % by weight or more, or 7 % by weight or more, based on 100 % by weight of the copolymer. There is no special limitation to the upper limit of the amount of the hydroxy-terminated siloxane in the copolymer, but considering economic feasibility, it may be 15 % by weight or less, 10 % by weight or less, or 9 % by weight or less.

In an embodiment, the hydroxy-terminated siloxane in the polysiloxane-polycarbonate copolymer has the following chemical formula 1a or chemical formula 1:

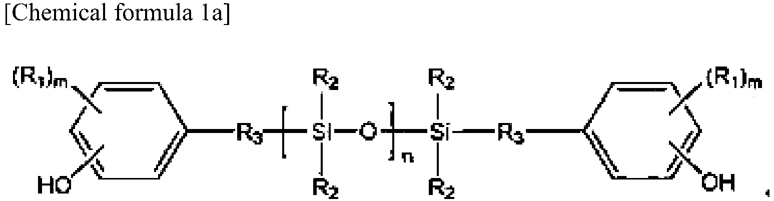

In the above chemical formula 1a,
R₁ independently represents hydrogen atom, halogen atom, hydroxy group, an alkyl, alkoxy or aryl group having 1 to 20 carbon atoms, and for example, the halogen atom may be Cl or Br; the alkyl group may be an alkyl group having 1 to 13 carbon atoms, for example, methyl, ethyl or propyl; the alkoxy group may be an alkoxy group having 1 to 13 carbon atoms, for example, methoxy, ethoxy or propoxy; and the aryl group may be an aryl group having 6 to 10 carbon atoms, for example, phenyl, chlorophenyl or tolyl;
R₂ independently represents a hydrocarbon group having 1 to 13 carbon atoms, or hydroxy group, and for example, R₂ may be an alkyl or alkoxy group having 1 to 13 carbon atoms, an alkenyl or alkenyloxy group having 2 to 13 carbon atoms, a cycloalkyl or cycloalkoxy group having 3 to 6 carbon atoms, an aryloxy group having 6 to 10 carbon atoms, an aralkyl or aralkoxy group having 7 to 13 carbon atoms, or an alkaryl or alkaryloxy group having 7 to 13 carbon atoms;
R₃ independently represents an alkylene group having 2 to 8 carbon atoms;
m independently represents an integer of 0 to 4; and
n represents an integer of 30 to 200, preferably an integer of 40 to 170, and more preferably an integer of 50 to 120.

In an embodiment, as the hydroxy-terminated siloxane of the above chemical formula 1a, a siloxane monomer of Dow Corning 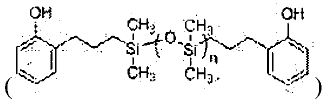 may be used, but it is not limited thereto.

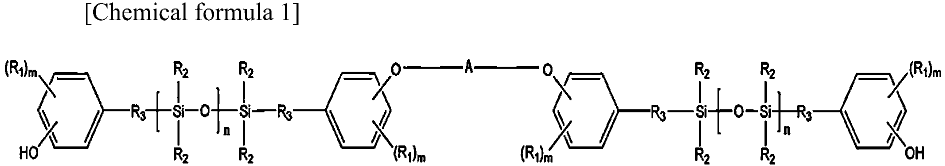

In the above chemical formula 1, R₁, R₂, R₃, and m are the same as defined in the above chemical formula 1a; n independently represents an integer of 15 to 100, preferably an integer of 20 to 80, and more preferably an integer of 25 to 60; and A represents a structure of the following chemical formula 2 or chemical formula 3:

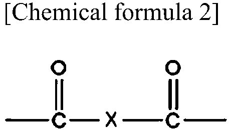

In the above chemical formula 2, X is Y or NH-Y-NH, wherein Y represents a linear or branched aliphatic group having 1 to 20 carbon atoms; a cycloalkylene group (for example, a cycloalkylene group having 3 to 6 carbon atoms); or a mononucleus or polynucleus arylene group having 6 to 30 carbon atoms which is unsubstituted or substituted with halogen atom, alkyl group, alkoxy group, aryl group or carboxyl group; and for example, Y may be an aliphatic group which is unsubstituted or substituted with halogen atom; an aliphatic group comprising oxygen, nitrogen or sulfur atom in the main chain; or an arylene group which can be derived from bisphenol A, resorcinol, hydroquinone or diphenylphenol, and for example, Y may be represented by one of the following chemical formulas 2a to 2h:

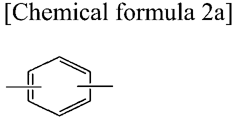

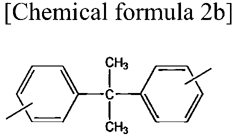

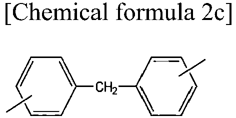

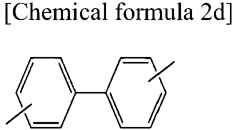

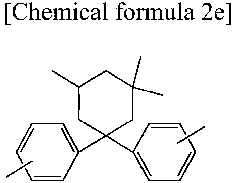

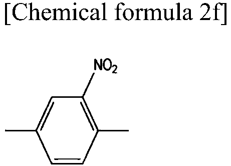

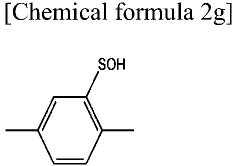

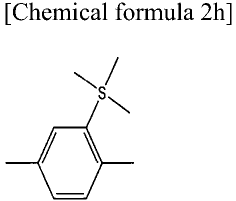

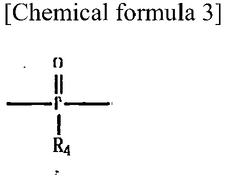

In the above chemical formula 3, R₄ represents an aromatic hydrocarbon group or aromatic/aliphatic mixed hydrocarbon group having 6 to 30 carbon atoms, or an aliphatic hydrocarbon group having 1 to 20 carbon atoms, wherein R₄ may have a structure containing halogen, oxygen, nitrogen or sulfur in addition to carbon atom, and for example, R₄ may be phenyl, chlorophenyl or tolyl (preferably, phenyl).

In an embodiment, the hydroxy-terminated siloxane of the above chemical formula 1 may be a reaction product of a hydroxy-terminated siloxane of the above chemical formula 1a (where n represents an integer of 15 to 100) and an acyl compound, wherein the acyl compound may have, for example, a structure of aromatic type, aliphatic type, or mixed type containing aromatic and aliphatic groups together. If the acyl compound is an aromatic or mixed type, it may have 6 to 30 carbon atoms, and if the acyl compound is an aliphatic type, it may have 1 to 20 carbon atoms. The acyl compound may further contain halogen, oxygen, nitrogen or sulfur atom.

In other embodiment, the hydroxy-terminated siloxane of the above chemical formula 1 may be a reaction product of a hydroxy-terminated siloxane of the above chemical formula 1a (where n represents an integer of 15 to 100) and a diisocyanate compound, wherein the diisocyanate compound may be, for example, 1,4-phenylenediisocyanate, 1,3-phenylenediisocyanate or 4,4'-methylenediphenyl diisocyanate.

In another embodiment, the hydroxy-terminated siloxane of the above chemical formula 1 may be a reaction product of a hydroxy-terminated siloxane of the above chemical formula 1a (where n represents an integer of 15 to 100) and a phosphorus-containing compound (aromatic or aliphatic phosphate compound), wherein the phosphorus-containing compound may be represented by the following chemical formula 1b:

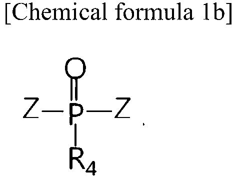

In the above chemical formula 1b, R₄ is the same as defined in the above chemical formula 3, and Z independently represents phosphorus atom, halogen atom, hydroxy group, carboxyl group, or alkyl, alkoxy or aryl group (having 1 to 20 carbon atoms).

In an embodiment, the polycarbonate block in the polysiloxane-polycarbonate copolymer has the following chemical formula 4:

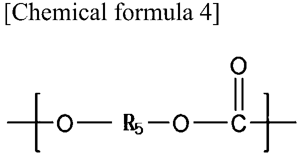

In the above chemical formula 4, R₅ represents divalent aromatic hydrocarbon group having 6 to 30 carbon atoms which is unsubstituted or substituted with divalent alkyl group (having 1 to 20 carbon atoms) (e.g., divalent alkyl group having 1 to 13 carbon atoms), divalent cycloalkyl group (e.g., divalent cycloalkyl group having 3 to 6 carbon atoms), divalent alkenyl group (e.g., divalent alkenyl group having 2 to 13 carbon atoms), divalent alkoxy group (e.g., divalent alkoxy group having 1 to 13 carbon atoms), or halogen atom or nitro.

In the above, the aromatic hydrocarbon group may be derived from a compound having a structure of the following chemical formula 4a:

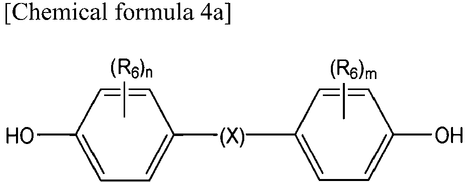

In the above chemical formula 4a, X represents alkylene group, a linear, branched, or cyclic alkylene group without functional group; or a linear, branched, or cyclic alkylene group comprising one or more functional groups such as sulfide, ether, sulfoxide, sulfone, ketone, naphthyl, isobutylphenyl, etc. and preferably, X may be a linear or branched alkylene group having 1 to 10 carbon atoms, or a cyclic alkylene group having 3 to 6 carbon atoms; R₆ independently represents hydrogen atom, halogen atom, or alkyl group, for example, a linear or branched alkyl group having 1 to 20 carbon atoms, or a cyclic alkyl group having 3 to 20 carbon atoms (preferably, 3 to 6 carbon atoms); and each of n and m is independently an integer of 0 to 4.

The compound of the above chemical formula 4a may be, for example, bis(4-hydroxyphenyl)methane, bis(4-hydroxyphenyl)phenylmethane, bis(4-hydroxyphenyl)naphthylmethane, bis(4-hydroxyphenyl)-(4-isobutylphenyl)methane, 1,1-bis(4-hydroxyphenyl)ethane, 1-ethyl-1,1-bis(4-hydroxyphenyl)propane, 1-phenyl-1,1-bis(4-hydroxyphenyl)ethane, 1-naphthyl-1,1-bis(4-hydroxyphenyl)ethane, 1,2-bis(4-hydroxyphenyl)ethane, 1,10-bis(4-hydroxyphenyl)decane, 2-methyl-1,1-bis(4-hydroxyphenyl)propane, 2,2-bis(4-hydroxyphenyl)propane, 2,2-bis(4-hydroxyphenyl)butane, 2,2-bis(4-hydroxyphenyl)pentane, 2,2-bis(4-hydroxyphenyl)hexane, 2,2-bis(4-hydroxyphenyl)nonane, 2,2-bis(3-methyl-4-hydroxyphenyl)propane, 2,2-bis(3-fluoro-4-hydroxyphenyl)propane, 4-methyl-2,2-bis(4-hydroxyphenyl)pentane, 4,4-bis(4-hydroxyphenyl)heptane, diphenyl-bis(4-hydroxyphenyl)methane, resorcinol, hydroquinone, 4,4'-dihydroxyphenyl ether[bis(4-hydroxyphenyl)ether], 4,4'-dihydroxy-2,5-dihydroxydiphenyl ether, 4,4'-dihydroxy-3,3'-dichlorodiphenyl ether, bis(3,5-dimethyl-4-hydroxyphenyl)ether, bis(3,5-dichloro-4-hydroxyphenyl)ether, 1,4-dihydroxy-2,5-dichlorobenzene, 1,4-dihydroxy-3-methylbenzene, 4,4'-dihydroxydiphenol[p,p'-dihydroxyphenyl], 3,3'-dichloro-4,4'-dihydroxyphenyl, 1,1-bis(4-hydroxyphenyl)cyclohexane, 1,1-bis(3,5-dimethyl-4-hydroxyphenyl)cyclohexane, 1,1-bis(3,5-dichloro-4-hydroxyphenyl)cyclohexane, 1,1-bis(3,5-dimethyl-4-hydroxyphenyl)cyclododecane, 1,1-bis(4-hydroxyphenyl)cyclododecane, 1,1-bis(4-hydroxyphenyl)butane, 1,1-bis(4-hydroxyphenyl)decane, 1,4-bis(4-hydroxyphenyl)propane, 1,4-bis(4-hydroxyphenyl)butane, 1,4-bis(4-hydroxyphenyl)isobutane, 2,2-bis(4-hydroxyphenyl)butane, 2,2-bis(3-chloro-4-hydroxyphenyl)propane, bis(3,5-dimethyl-4-hydroxyphenyl)methane, bis(3,5-dichloro-4-hydroxyphenyl)methane, 2,2-bis(3,5-dimethyl-4-hydroxyphenyl)propane, 2,2-bis(3,5-dibromo-4-hydroxyphenyl)propane, 2,2-bis(3,5-dichloro-4-hydroxyphenyl)propane, 2,4-bis(4-hydroxyphenyl)-2-methyl-butane, 4,4'-thiodiphenol[bis(4-hydroxyphenyl)sulfone], bis(3,5-dimethyl-4-hydroxyphenyl)sulfone, bis(3-chloro-4-hydroxyphenyl)sulfone, bis(4-hydroxyphenyl)sulfide, bis(4-hydroxyphenyl)sulfoxide, bis(3-methyl-4-hydroxyphenyl)sulfide, bis(3,5-dimethyl-4-hydroxyphenyl)sulfide, bis(3,5-dibromo-4-hydroxyphenyl)sulfoxide, 4,4'-dihydroxybenzophenone, 3,3',5,5'-tetramethyl-4,4'-dihydroxybenzophenone, 4,4'-dihydroxy diphenyl, methylhydroquinone, 1,5-dihydroxynaphthalene, or 2,6-dihydroxynaphthalene, but it is not limited thereto. Among them, the representative one is 2,2-bis(4-hydroxyphenyl)propane (bisphenol A). For other functional dihydric phenols, US Patent Nos. 2,999,835, 3,028,365, 3,153,008 and 3,334,154 may be referred to. The above dihydric phenol may be used alone or in combination of two or more of them.

As another monomer for the polycarbonate block, a carbonate precursor, for example, carbonyl chloride (phosgene), carbonyl bromide, bis halo formate, diphenylcarbonate, or dimethylcarbonate, etc. may be used.

The polysiloxane-polycarbonate copolymer used in the present invention preferably has a viscosity average molecular weight (Mv) of 15,000 to 30,000, and more preferably 17,000 to 22,000. If the viscosity average molecular weight of the polysiloxane-polycarbonate copolymer is less than 15,000, the mechanical properties may deteriorate seriously, and to the contrary, if it is more than 30,000, there may be a problem in the processing of resin due to the increase of melting viscosity.

The thermoplastic resin composition of the present invention comprises said (B) polysiloxane-polycarbonate copolymer in an amount of from more than 15 parts by weight to less than 45 parts by weight, based on total 100 parts by weight of the composition. If the amount of the component (B) in total 100 parts by weight of the composition is 15 parts by weight or less, the impact resistance of the composition may become poor, and to the contrary, if it is 45 parts by weight or more, the scratch resistance of the composition may become poor.

In an embodiment, based on total 100 parts by weight of the thermoplastic resin composition of the present invention, the amount of the component (B) may be, for example, more than 15 parts by weight, 15.5 parts by weight or more, 16 parts by weight or more, 17 parts by weight or more, 18 parts by weight or more, 19 parts by weight or more, or 20 parts by weight or more, and it also may be less than 45 parts by weight, 44.5 parts by weight or less, 44 parts by weight or less, 43 parts by weight or less, 42 parts by weight or less, 41 parts by weight or less, or 40 parts by weight or less, but it is not especially limited thereto.

### (C) Modified acryl-based copolymer

The modified acryl-based copolymer comprised in the thermoplastic resin composition of the present invention is used to improve the scratch resistance of the resin composition.

In an embodiment, the modified acryl-based copolymer may be a copolymer of aromatic or alicyclic acryl-based compound and compound capable of being copolymerized therewith, and the copolymerizable compound may be alkyl methacrylate, alkyl acrylate, unsaturated carboxylic acid, acid anhydride, acrylate containing hydroxy group, amide, nitrile, allyl glycidyl ether, glycidyl methacrylate, styrene, or a combination thereof.

According to an embodiment of the present invention, the modified acryl-based copolymer may be a copolymer of polymethyl methacrylate (PMMA), and more specifically, poly(methyl methacrylate-co-phenyl methacrylate) (PMPA).

In an embodiment, the weight average molecular weight of the modified acryl-based copolymer may be 10,000 to 20,000, more specifically 15,000 to 20,000.

The thermoplastic resin composition of the present invention comprises said (C) modified acryl-based copolymer in an amount of from more than 5 parts by weight to less than 25 parts by weight, based on total 100 parts by weight of the composition. If the amount of the component (C) in total 100 parts by weight of the composition is 5 parts by weight or less, the scratch resistance of the composition may become poor, and to the contrary, if it is 25 parts by weight or more, the impact resistance of the composition may become poor.

In an embodiment, based on total 100 parts by weight of the thermoplastic resin composition of the present invention, the amount of the component (C) may be, for example, more than 5 parts by weight, 5.5 parts by weight or more, 6 parts by weight or more, 7 parts by weight or more, 8 parts by weight or more, 9 parts by weight or more, or 10 parts by weight or more, and it also may be less than 25 parts by weight, 24.5 parts by weight or less, 24 parts by weight or less, 23 parts by weight or less, 22 parts by weight or less, 21 parts by weight or less, or 20 parts by weight or less, but it is not especially limited thereto.

### (D) Alumina-based inorganic filler

The alumina (Al₂O₃)-based inorganic filler comprised in the thermoplastic resin composition of the present invention is used to improve the scratch resistance of the resin composition.

In an embodiment, the average particle size of the alumina-based inorganic filler may be 50 µm or less (e.g., 10 to 50 µm), and more specifically, 40 µm or less (e.g., 20 to 40 µm), but it is not limited thereto.

In an embodiment, the hardness of the alumina-based inorganic filler may be 16 Gpa or more (e.g., 16 to 30 Gpa), and more specifically, 20 Gpa or more (e.g., 20 to 25 Gpa), but it is not limited thereto.

The thermoplastic resin composition of the present invention comprises said (D) alumina-based inorganic filler in an amount of from more than 0.1 part by weight to less than 3 parts by weight, based on total 100 parts by weight of the composition. If the amount of the component (D) in total 100 parts by weight of the composition is 0.1 part by weight or less, the scratch resistance of the composition may become poor, and to the contrary, if it is 3 parts by weight or more, the impact resistance of the composition may become poor.

In an embodiment, based on total 100 parts by weight of the thermoplastic resin composition of the present invention, the amount of the component (D) may be, for example, more than 0.1 part by weight, 0.15 part by weight or more, 0.2 part by weight or more, 0.3 part by weight or more, 0.4 part by weight or more, or 0.5 part by weight or more, and it also may be less than 3 parts by weight, 2.9 parts by weight or less, 2.5 parts by weight or less, 2 parts by weight or less, or 1.5 parts by weight or less, but it is not especially limited thereto.

### (E) Triazine-based ultraviolet stabilizer

The triazine-based ultraviolet stabilizer comprised in the thermoplastic resin composition of the present invention is used to improve the color change resistance of the resin composition.

In an embodiment, the triazine-based ultraviolet stabilizer may absorb ultraviolet rays having a wavelength in the range of 250 to 400 nm, and more specifically, it may be hydroxyphenyl triazine, but it is not limited thereto.

The thermoplastic resin composition of the present invention comprises said (E) triazine-based ultraviolet stabilizer in an amount of from more than 0.1 part by weight to 3 parts by weight, based on total 100 parts by weight of the composition. If the amount of the component (E) in total 100 parts by weight of the composition is 0.1 part by weight or less, the color change resistance of the composition may become poor, and to the contrary, if it is more than 3 parts by weight, it is not desirable in economic aspect since the color change resistance of the composition is no longer improved.

In an embodiment, based on total 100 parts by weight of the thermoplastic resin composition of the present invention, the amount of the component (E) may be, for example, more than 0.1 part by weight, 0.15 part by weight or more, 0.2 part by weight or more, 0.3 part by weight or more, 0.4 part by weight or more, 0.5 part by weight or more, 0.6 part by weight or more, 0.7 part by weight or more, 0.8 part by weight or more, 0.9 part by weight or more, or 1 part by weight or more, and it also may be 3 parts by weight or less, 2.9 parts by weight or less, 2.8 parts by weight or less, 2.7 parts by weight or less, 2.6 parts by weight or less, 2.5 parts by weight or less, 2.4 parts by weight or less, 2.3 parts by weight or less, 2.2 parts by weight or less, 2.1 parts by weight or less, 2 parts by weight or less, 1.9 parts by weight or less, 1.8 parts by weight or less, 1.7 parts by weight or less, 1.6 parts by weight or less, 1.5 parts by weight or less, or 1.4 parts by weight or less, but it is not especially limited thereto.

### (F) Core-shell type acryl-based impact modifier

The core-shell type acryl-based impact modifier comprised in the thermoplastic resin composition of the present invention is used to improve the impact resistance of the resin composition.

In an embodiment, the core-shell type acryl-based impact modifier may be one or more copolymers of core-shell structure selected from acrylate copolymer, ethylene-acrylate copolymer, polyalkyl methacrylate copolymer, or a combination thereof, but it is not limited thereto.

The thermoplastic resin composition of the present invention comprises said (F) core-shell type acryl-based impact modifier in an amount of from more than 1 part by weight to less than 8 parts by weight, based on total 100 parts by weight of the composition. If the amount of the component (F) in total 100 parts by weight of the composition is 1 part by weight or less, the impact resistance of the composition may become poor, and to the contrary, if it is 8 parts by weight or more, the scratch resistance of the composition may become poor.

In an embodiment, based on total 100 parts by weight of the thermoplastic resin composition of the present invention, the amount of the component (F) may be, for example, more than 1 part by weight, 1.1 parts by weight or more, 1.5 parts by weight or more, 2 parts by weight or more, 2.5 parts by weight or more, or 3 parts by weight or more, and it also may be less than 8 parts by weight, 7.9 parts by weight or less, 7.5 parts by weight or less, 7 parts by weight or less, 6.5 parts by weight or less, or 6 parts by weight or less, but it is not especially limited thereto.

In addition to the above-explained components, the thermoplastic resin composition of the present invention may further comprise one or more other optional additives.

In an embodiment, the resin composition of the present invention may further comprise inorganic filler such as silica, silicate, glass fiber, glass bead, glass flake, clay, talc, mica, calcium carbonate, etc. to increase rigidity, heat resistance, and dimensional stability, and it may be comprised in an amount of 0.1 to 50 % by weight, based on the total resin composition.

In an embodiment, the resin composition of the present invention may further comprise coloring agent, which may be comprised in an amount of 0.1 to 10 % by weight, based on the total resin composition.

In an embodiment, the resin composition of the present invention may further comprise other stabilizer such as heat stabilizer, etc. which may be comprised in an amount of 0.1 to 5 % by weight, based on the total resin composition.

In an embodiment, the resin composition of the present invention may further comprise other processing aid such as release agent, lubricant, etc. which may be comprised in an amount of 0.01 to 0.5 % by weight, based on the total resin composition.

According to the other aspect of the present invention, a molded article comprising the above-explained thermoplastic resin composition of the present invention is provided.

The molded article includes interior and exterior materials that require scratch resistance, color change resistance and impact resistance, and specifically includes mobile phone housings and housings for electrical and electronic products, but it is not limited thereto.

The present invention is explained in more detail through the following Examples and Comparative Examples. However, the scope of the present invention is not limited thereby in any manner.

### EXAMPLES

### [Explanation on the components used]

(A): Linear polycarbonate resin (PC) (TRIREX 3022PJ, Samyang Corporation)
(B): Linear polysiloxane-polycarbonate copolymer with the following structure (TRIREX ST6-3022PJ, Samyang Corporation) 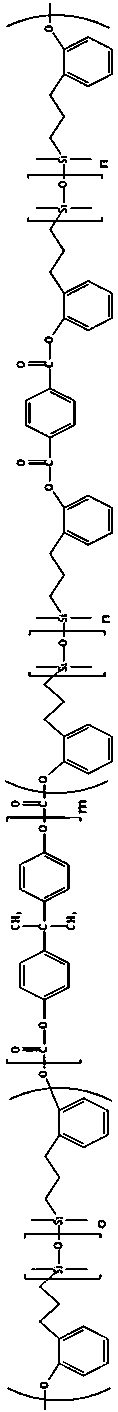 (where o is an integer of from 56 to 60, n is independently an integer of from 28 to 30, and m is an integer of from 1 to 38)
(C): Modified acryl-based copolymer (PMPA, poly(methyl methacrylate-co-phenyl methacrylate) (SA256 (LX MMA), H880 (Mitsubishi Chemical))
(D-1): Alumina-based inorganic filler (Renaflair White sapphire, Merk)
(D-2): Mica (RC1001, CQV)
(E-1): Triazine-based ultraviolet stabilizer (CYASORB UV5411, SOLVAY)
(E-2): Benzotriazole-based ultraviolet stabilizer (Tinuvin 1577 (BASF), T-1577 (Songwon))
(F-1): Core-shell type acryl-based impact modifier (PARALOID EXL2313, DOW)
(F-2): Copolymer-type acryl-based impact modifier (LA4285, Kuraray)
(F-3): MBS (Methacrylate-Butadiene-Styrene)-based impact modifier (M732, KANEKA)
(G): Heat stabilizer (SONG1076 (Songwon), PETS AHS (Clariant))
(H): Coloring agent (TiO₂ and salt dye) (Kronos 2233 (Kronos), BL 97 (BASF))

The coloring agent was added for clear contrast of color change during the color change resistance test of the resin composition.

### [Examples 1-12 and Comparative Examples 1-21]

The components of the composition according to the kinds and amounts shown in the following Table 1 were mixed using a Henschel mixer for uniform dispersion. The mixture was then extruded into pellet form at the temperature of 240-270°C using a twin-screw melt mixing extruder with L/D=40 and Φ=25 mm. The pellets were dried in a hot air dryer at 100-120°C for at least 4 hours, and then injection-molded into specimens at 260-280°C. The following properties were then measured and shown in the following Table 1.

### [Methods of property measurement]

(1) Izod impact strength (Izod): It was measured for specimens with a 1/8" thickness at room temperature according to ASTM D256.
(2) Pencil hardness: Pencil hardness was measured after leaving the specimens at 23°C and 50% relative humidity for 48 hours according to ASTM D3363. The specimen surface was scratched three times, and the degree of scratching was observed with naked eye. When two or more pencil scratches occurred on the specimen surface, the pencil hardness grade was classified as follows:
   6B-5B-4B-3B-2B-B-HB-F-H-2H-3H-4H-5H -6H
(3) Color change resistance: Specimens were exposed to ultraviolet (UVB) ray for 72 hours, and the color change (color difference: dE) before and after UV irradiation was measured using a colorimeter.

**[Table 1] (amount unit: part by weight)**

| | Examples | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| (A) | 53.2 | 48.2 | 43.2 | 53.7 | 52.7 | 53.6 | 52.8 | 67 | 55.2 | 51.2 | 57.2 | 37.2 |
| (B) | 30 | 30 | 30 | 30 | 30 | 30 | 30 | 30 | 30 | 30 | 20 | 40 |
| (C) | 10 | 15 | 20 | 10 | 10 | 10 | 10 | 10 | 10 | 10 | 10 | 10 |
| (D-1) | 1 | 1 | 1 | 0.5 | 1.5 | 1 | 1 | 1 | 1 | 1 | 1 | 1 |
| (D-2) | - | - | - | - | - | - | - | - | - | - | - | - |
| (E-1) | 1 | 1 | 1 | 1 | 1 | 0.6 | 1.4 | 2 | 1 | 1 | 1 | 1 |
| (E-2) | - | - | - | - | - | - | - | - | - | - | - | - |
| (F-1) | 4 | 4 | 4 | 4 | 4 | 4 | 4 | 4 | 3 | 6 | 4 | 4 |
| (F-2) | - | - | - | - | - | - | - | - | - | - | - | - |
| (F-3) | - | - | - | - | - | - | - | - | - | - | - | - |
| (G) | 0.8 | 0.8 | 0.8 | 0.8 | 0.8 | 0.8 | 0.8 | 0.8 | 0.8 | 0.8 | 0.8 | 0.8 |
| (H) | 6 | 6 | 6 | 6 | 6 | 6 | 6 | 6 | 6 | 6 | 6 | 6 |
| Impact strength | 55 | 45 | 35 | 68 | 30 | 54 | 56 | 54 | 32 | 65 | 30 | 60 |
| Pencil hardness | B | HB | HB | B | HB | B | B | B | B | B | HB | B |
| Color change resistance (dE) | 1.32 | 1.3 | 1.28 | 1.35 | 1.32 | 2.73 | 1.2 | 1.2 | 1.39 | 1.36 | 1.23 | 1.31 |

**[Table 1] (continued) (amount unit: part by weight)**

| | Comparative Examples | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| (A) | 93.2 | 83.2 | 53.2 | 55 | 53.6 | 53.2 | 57.2 | 53.2 | 53.2 | 57.2 | 62.2 | 67 |
| (B) | - | - | 30 | 30 | 30 | 30 | 30 | 30 | 30 | 30 | 15 | 45 |
| (C) | - | 10 | 10 | 10 | 10 | 10 | 10 | 10 | 10 | - | 10 | 10 |
| (D-1) | 1 | 1 | - | 1 | 1 | 1 | 1 | 1 | 1 | 1 | 1 | 1 |
| (D-2) | - | - | 1 | - | - | - | - | - | - | - | - | - |
| (E-1) | 1 | 1 | 1 | - | - | - | 1 | 1 | 1 | 1 | 1 | 1 |
| (E-2) | - | - | - | - | 0.6 | 1 | - | - | - | - | - | - |
| (F-1) | 4 | 4 | 4 | 4 | 4 | 4 | - | - | - | 4 | 4 | 4 |
| (F-2) | - | - | - | - | - | - | - | 4 | - | - | - | - |
| (F-3) | - | - | - | - | - | - | - | - | 4 | - | - | - |
| (G) | 0.8 | 0.8 | 0.8 | 0.8 | 0.8 | 0.8 | 0.8 | 0.8 | 0.8 | 0.8 | 0.8 | 0.8 |
| (H) | 6 | 6 | 6 | 6 | 6 | 6 | 6 | 6 | 6 | 6 | 6 | 6 |
| Impact strength | 76 | 15 | 13 | 55 | 55 | 55 | 5 | 56 | 56 | 72 | 13 | 60 |
| Pencil hardness | 4B | B | B | B | B | B | HB | 2B | 2B | 3B | B | 2B |
| Color change resistance (dE) | 1.42 | 1.39 | 1.35 | 6.37 | 3.75 | 3.21 | 1.24 | 1.33 | 2.23 | 1.4 | 1.2 | 1.3 |

**[Table 1] (continued) (amount unit: part by weight)**

| | Comparative Examples | | | | | | | | |
|---|---|---|---|---|---|---|---|---|---|
| | 13 | 14 | 15 | 16 | 17 | 18 | 19 | 20 | 21 |
| (A) | 52.2 | 67 | 48.1 | 67 | 48.1 | 50.2 | 67 | 30 | 70 |
| (B) | 30 | 30 | 30 | 30 | 30 | 30 | 30 | 40 | 20 |
| (C) | 5 | 25 | 10 | 10 | 10 | 10 | 10 | 15 | - |
| (D-1) | 1 | 1 | 0.1 | 3 | 1 | 1 | 1 | 1 | 0.5 |
| (D-2) | - | - | - | - | - | - | - | - | - |
| (E-1) | 1 | 1 | 1 | 1 | 0.1 | 1 | 1 | 1 | 0.5 |
| (E-2) | - | - | - | - | - | - | - | - | - |
| (F-1) | 4 | 4 | 4 | 4 | 4 | 1 | 8 | 6 | 2 |
| (F-2) | - | - | - | - | - | - | - | - | - |
| (F-3) | - | - | - | - | - | - | - | - | - |
| (G) | 0.8 | 0.8 | 0.8 | 0.8 | 0.8 | 0.8 | 0.8 | 1 | 1 |
| (H) | 6 | 6 | 6 | 6 | 6 | 6 | 6 | 6 | 6 |
| Impact strength | 62 | 15 | 60 | 15 | 54 | 12 | 68 | 30 | 75 |
| Pencil hardness | 2B | F | 2B | B | B | HB | 3B | 2B | 3B |
| Color change resistance (dE) | 1.3 | 1.2 | 1.3 | 1.3 | 6.2 | 1.3 | 1.4 | 1.51 | 2.92 |

As can be seen from the results in Table 1 above, the compositions of Examples 1-12 according to the present invention all had excellent scratch resistance with a pencil hardness of B or higher, excellent impact resistance with a room temperature IZOD (Notched, 1/8") impact strength of 30 kgfcm/cm or higher, and excellent color change resistance with a color difference (dE) of less than 3 after UVB (72h) irradiation. On the other hand, the compositions of Comparative Examples 1, 8-10, 12, 13, 15, and 19-21 had poor scratch resistance, the compositions of Comparative Examples 2, 3, 7, 11, 14, 16, and 18 had poor impact resistance, and the compositions of Comparative Examples 4-6, and 17 had poor color change resistance.

## Claims

1. A thermoplastic resin composition comprising:
(A) polycarbonate resin;
(B) polysiloxane-polycarbonate copolymer comprising hydroxy-terminated siloxane and polycarbonate block as repeating units;
(C) modified acryl-based copolymer;
(D) alumina-based inorganic filler;
(E) triazine-based ultraviolet stabilizer; and
(F) core-shell type acryl-based impact modifier;
wherein, based on total 100 parts by weight of the composition,
the amount of the (A) component is from more than 30 parts by weight to less than 70 parts by weight,
the amount of the (B) component is from more than 15 parts by weight to less than 45 parts by weight,
the amount of the (C) component is from more than 5 parts by weight to less than 25 parts by weight,
the amount of the (D) component is from more than 0.1 parts by weight to less than 3 parts by weight,
the amount of the (E) component is from more than 0.1 parts by weight to 3 parts by weight, and
the amount of the (F) component is from more than 1 parts by weight to less than 8 parts by weight.

2. The thermoplastic resin composition of claim 1, wherein the polycarbonate resin (A) is thermoplastic aromatic polycarbonate resin.

3. The thermoplastic resin composition of claim 1, wherein the viscosity average molecular weight of the polycarbonate resin (A) is 15,000 to 40,000.

4. The thermoplastic resin composition of claim 1, wherein the hydroxy-terminated siloxane in the polysiloxane-polycarbonate copolymer (B) has the following chemical formula 1a or chemical formula 1: 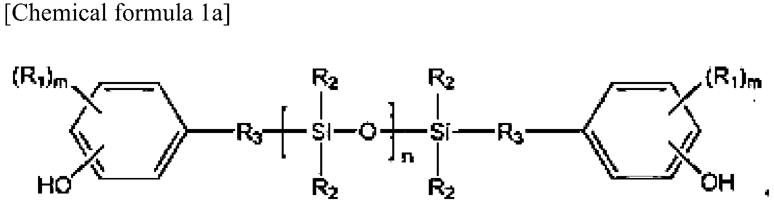 in chemical formula 1a, R₁ independently represents hydrogen atom, halogen atom, hydroxy group, alkyl group, alkoxy group or aryl group; R₂ independently represents hydrocarbon group or hydroxy group; R₃ independently represents alkylene group having 2 to 8 carbon atoms; m independently represents an integer of 0 to 4; and n represents an integer of 30 to 200; 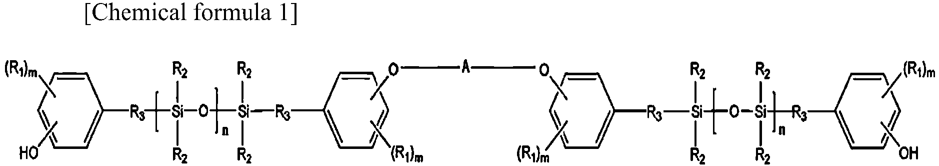 in chemical formula 1, R₁, R₂, R₃ and m are the same as defined in the above chemical formula 1a; n independently represents an integer of 15 to 100; and A represents a structure of the following chemical formula 2 or chemical formula 3: 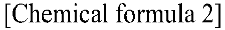 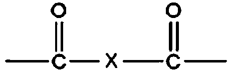 in chemical formula 2, X is Y or NH-Y-NH, wherein Y represents linear or branched aliphatic group having 1 to 20 carbon atoms; cycloalkylene group; or mononucleus or polynucleus arylene group having 6 to 30 carbon atoms which is unsubstituted or substituted with halogen atom, alkyl group, alkoxy group, aryl group or carboxyl group; 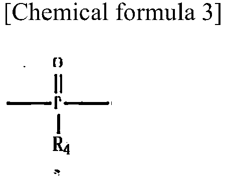 in chemical formula 3, R₄ represents aromatic hydrocarbon group or aromatic/aliphatic mixed hydrocarbon group having 6 to 30 carbon atoms, or aliphatic hydrocarbon group having 1 to 20 carbon atoms.

5. The thermoplastic resin composition of claim 1, wherein the polycarbonate block in the polysiloxane-polycarbonate copolymer (B) has the following chemical formula 4: 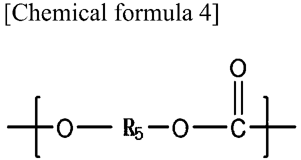 in chemical formula 4, R₅ represents divalent aromatic hydrocarbon group having 6 to 30 carbon atoms which is unsubstituted or substituted with divalent alkyl group, divalent cycloalkyl group, divalent alkenyl group, divalent alkoxy group, or halogen atom or nitro.

6. The thermoplastic resin composition of claim 1, wherein the modified acryl-based copolymer (C) is poly(methyl methacrylate-co-phenyl methacrylate) (PMPA).

7. A molded article comprising the thermoplastic resin composition of any one of claims 1 to 6.
